# EUROPEAN PATENT APPLICATION

(11) **EP 4 714 677 A1**
(43) Date of publication of application: **25.03.2026**
(21) Application number: 24845227.8
(22) Date of filing: 11.06.2024
(51) Int. Cl.: B60C 11/03, B60C 5/00, B60C 11/13

(54) **PNEUMATIC TIRE**

(30) Priority: 26.07.2023 JP 2023121988; 26.12.2023 JP 2023219716
(71) Applicant: BRIDGESTONE CORPORATION, Chuo-ku Tokyo 104-8340 (JP)
(72) Inventor: HIRUTA, Shohei, Tokyo 104-8340 (JP); HISHIGAE, Akira, Tokyo 104-8340 (JP); FUJITA, Shungo, Tokyo 104-8340 (JP)
(74) Representative: Marks & Clerk LLP
(86) International application number: PCT/JP2024/021228
(87) International publication number: WO 2025/022845

(57) **Abstract**

A pneumatic tire that has first width direction grooves and second width direction grooves alternately arranged in the tire circumferential direction while being spaced apart from each other in the tire circumferential direction, where one first width direction groove of a pair has a first portion extending from an outer (inner) side toward an inner (outer) side in the tire width direction and extending toward one side in the tire circumferential direction, and one second width direction groove of the pair extends from the outer (inner) side toward the inner (outer) side in the tire width direction and extends toward the other side in the tire circumferential direction, and an inner (outer) end in the tire width direction of the one second width direction groove of the pair is positioned on the outer side in the tire width direction relative to an inner (outer) end in the tire width direction of the one first width direction groove of the pair.

## Description

### TECHNICAL FIELD

The present disclosure relates to a pneumatic tire.

### BACKGROUND

Conventionally, in pneumatic tires for high-speed travel at speeds exceeding 150 km/h, it has been proposed to arrange width direction grooves extending in the tire width direction in the shoulder land portion on the vehicle-mounted outer side, so as to appropriately moderate the rigidity of the land portion and thereby improve gripping performance.

### CITATION LIST

### Patent Literature

PTL 1: Pamphlet of International Publication No. 2021/054261

### SUMMARY

### (Technical Problem)

However, in the technology described in PTL 1, since a plurality of width direction grooves (71) mainly extending in the same direction are arranged, the rigidity is high with respect to input from the extension direction of the width direction grooves, whereas, for example, with respect to input from the vertical direction relative to the extension direction of the width direction grooves, the rigidity is low, resulting in a problem in which the land portion is easily deformed, and there has been room for improvement in enhancing gripping performance.

The purpose of the present disclosure is to provide a pneumatic tire with improved gripping performance.

### (Solution to Problem)

The gist configuration of the present disclosure is as follows.
(1) A pneumatic tire having at least one circumferential main groove extending in the tire circumferential direction on a tread surface, wherein
   a plurality of land portions are defined between the circumferential main groove and a tread edge or between the circumferential main grooves,
   a vehicle-mounted outermost land portion, which is the outermost land portion in the tire width direction on the vehicle-mounted outer side, is provided with a plurality of first width direction grooves extending in the tire width direction and having at least one end terminated within the vehicle-mounted outermost land portion, and a plurality of second width direction grooves extending in the tire width direction,
   the first width direction grooves and the second width direction grooves are alternately arranged in the tire circumferential direction while being spaced apart from each other in the tire circumferential direction,
   one of the first width direction grooves and one of the second width direction grooves adjacent to the one first width direction groove on one side in the tire circumferential direction form a pair,
   the one first width direction groove of the pair has a first portion extending from the outer side toward the inner side in the tire width direction and extending toward one side in the tire circumferential direction,
   the one second width direction groove of the pair extends from the outer side toward the inner side in the tire width direction and extends toward the other side in the tire circumferential direction,
   and an inner end in the tire width direction of the one second width direction groove of the pair is positioned on the outer side in the tire width direction relative to an inner end in the tire width direction of the one first width direction groove of the pair.

Here, the "tread surface" refers to the surface of the tread outer surface that comes into contact with the road surface over the entire circumference in the tire circumferential direction, when the pneumatic tire is mounted on an applicable rim, filled with a prescribed internal pressure, and loaded with the maximum load capability.

Also, the "tread edge" refers to the two outermost points in the tire width direction of the above tread surface.

Further, the "circumferential main groove" refers to a groove extending in the tire circumferential direction, and, in a reference state in which the pneumatic tire is mounted on an applicable rim, filled with a prescribed internal pressure, and unloaded, the groove width (opening width) is 2 mm or more.

Moreover, the "first width direction groove" refers to a groove extending in the tire width direction, and, in the above reference state, the groove width (opening width) is 2 mm or more over at least 80% of its extension length; the "second width direction groove" refers to a groove extending in the tire width direction, and, in the above reference state, the groove width (opening width) is 2 mm or more over at least 80% of its extension length.

Here, the "inclination angle" of a shallow groove described later refers, in the case where the shallow groove does not extend linearly, to the inclination angle of the line segment connecting both ends.

In the present specification, the "applicable rim" refers to the approved rim for the applicable size, as described or to be described in the future in the industrial standards effective in the region where the tire is produced and used, such as the JATMA YEAR BOOK of JATMA (the Japan Automobile Tyre Manufacturers Association) in Japan, the STANDARDS MANUAL of ETRTO (The European Tyre and Rim Technical Organisation) in Europe, or the YEAR BOOK of TRA (The Tire and Rim Association, Inc.) in the United States (that is, the "rim" above includes, in addition to current sizes, sizes that may be included in the above industrial standards in the future. As an example of "sizes to be described in the future," sizes described as "FUTURE DEVELOPMENTS" in the 2013 edition of ETRTO can be cited). In the case of sizes not described in the above industrial standards, it refers to a rim having a width corresponding to the bead width of the tire. Also, the "prescribed internal pressure" refers to the air pressure (maximum air pressure) corresponding to the maximum load capability for a single tire of the applicable size and ply rating as described in the above JATMA, etc.; in the case of sizes not described in the above industrial standards, the "prescribed internal pressure" refers to the air pressure (maximum air pressure) corresponding to the maximum load capability specified for each vehicle on which the tire is mounted. Further, the "maximum load" refers to the load corresponding to the above maximum load capability.

(2) A pneumatic tire having at least one circumferential main groove extending in the tire circumferential direction on a tread surface, wherein
a plurality of land portions are defined between the circumferential main groove and a tread edge or between the circumferential main grooves,
a vehicle-mounted outermost land portion, which is the outermost land portion in the tire width direction on the vehicle-mounted outer side, is provided with a plurality of first width direction grooves extending in the tire width direction and having at least one end terminated within the vehicle-mounted outermost land portion, and a plurality of second width direction grooves extending in the tire width direction,
the first width direction grooves and the second width direction grooves are alternately arranged in the tire circumferential direction while being spaced apart from each other in the tire circumferential direction,
one of the first width direction grooves and one of the second width direction grooves adjacent to the one first width direction groove on one side in the tire circumferential direction form a pair,
the one first width direction groove of the pair has a first portion extending from the inner side toward the outer side in the tire width direction and extending toward one side in the tire circumferential direction,
the one second width direction groove of the pair extends from the inner side toward the outer side in the tire width direction and extends toward the other side in the tire circumferential direction,
and an outer end in the tire width direction of the one second width direction groove of the pair is positioned on the outer side in the tire width direction relative to an outer end in the tire width direction of the one first width direction groove of the pair.

### (Advantageous Effect)

According to the present disclosure, it is possible to provide a pneumatic tire with improved gripping performance.

### BRIEF DESCRIPTION OF THE DRAWINGS

In the accompanying drawings:
FIG. 1 is a diagram illustrating a tread pattern of a pneumatic tire according to a first embodiment of the present disclosure;
FIG. 2 is a diagram illustrating a tread pattern of a pneumatic tire according to a third embodiment of the present disclosure; and
FIG. 3 is a diagram for explaining an example of arrangement of a communication device.

Hereinafter, embodiments of the present disclosure will be exemplified and described in detail with reference to the drawings.

### (First Embodiment)

The internal structure and the like of the pneumatic tire according to the first embodiment of the present disclosure (hereinafter also simply referred to as "tire") can be the same as those of conventional tires, and thus detailed description thereof will be omitted. On the other hand, as an example, the tire may be provided with a pair of bead portions, a carcass extending in a toroidal shape between the pair of bead portions, and a belt disposed on the tire radial outer side of the crown portion of the carcass.

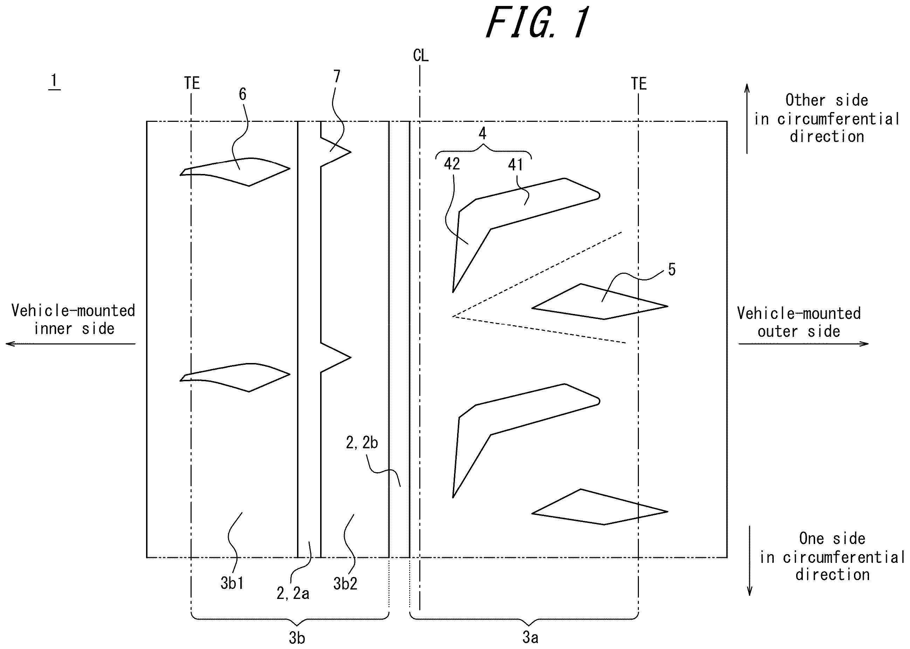

FIG. 1 is a diagram illustrating a tread pattern of a pneumatic tire according to the first embodiment of the present disclosure. In the following description, unless otherwise specified, dimensions and the like refer to those in the aforementioned reference state.

As illustrated in FIG. 1, this tire has, on the tread surface 1, one or more (two in the illustrated example) circumferential main grooves 2 (2a, 2b) extending in the tire circumferential direction. Further, this tire has a plurality of land portions 3 (3a, 3b (3b1, 3b2)) defined between the circumferential main groove 2 and the tread edge TE or between the circumferential main grooves 2 (2a, 2b). Specifically, on the vehicle-mounted outer side with the tire equatorial plane CL as the boundary, the vehicle-mounted outermost land portion 3a is defined by the circumferential main groove 2a and the tread edge TE. On the vehicle-mounted inner side with the tire equatorial plane CL as the boundary, the vehicle-mounted inner land portion 3b is defined by the circumferential main grooves 2a and 2b or by the circumferential main groove 2b and the tread edge TE. Between the circumferential main grooves 2a and 2b, the internal land portion 3b2 of the vehicle-mounted inner land portion is defined, and by the circumferential main groove 2a and the tread edge TE, the external land portion 3b1 of the vehicle-mounted inner land portion is defined.

This tire has, in the vehicle-mounted outermost land portion 3a, which is the outermost land portion in the tire width direction on the vehicle-mounted outer side, a plurality of first width direction grooves 4 extending in the tire width direction and having at least one end (both ends in the illustrated example) terminated within the vehicle-mounted outermost land portion 3a, and a plurality of second width direction grooves 5 extending in the tire width direction.

As illustrated, the first width direction grooves 4 and the second width direction grooves 5 are alternately arranged in the tire circumferential direction while being spaced apart from each other in the tire circumferential direction. In other words, one first width direction groove 4 and one second width direction groove 5 adjacent to the one first width direction groove 4 on one side in the tire circumferential direction form a pair, and a plurality of such pairs are provided at intervals in the tire circumferential direction. The pitch interval in the tire circumferential direction of the first width direction grooves 4 is not particularly limited, but may be, for example, 40 mm to 140 mm. The pitch interval in the tire circumferential direction of the second width direction grooves 5 is not particularly limited, but may be, for example, 40 mm to 140 mm. The shortest distance between the first width direction groove 4 and the second width direction groove 5 forming a pair is not particularly limited, but may be, for example, 15 mm to 60 mm.

One first width direction groove 4 forming a pair has a first portion 41 extending from the outer side toward the inner side in the tire width direction and extending toward one side in the tire circumferential direction. Further, the first width direction groove 4 further has a second portion 42 extending from the inner end in the tire width direction of the first portion 41 toward one side in the tire circumferential direction. The second portion 42 can further ensure drainage performance.

The groove width (opening width) of the first width direction groove 4 is not particularly limited, but in view of the balance between drainage performance (compliance with regulations when used for racing tires; the same applies hereinafter) and the rigidity of the land portion, it may be, for example, 5 mm to 20 mm. The groove depth (maximum depth) of the first width direction groove 4 is not particularly limited, but in view of the balance between drainage performance and the rigidity of the land portion, it may be, for example, 5 mm to 8 mm. The inclination angle of the first portion 41 with respect to the tire width direction is not particularly limited, but may be, for example, 10° to 20°. By setting it to 20° or less, the rigidity against input in the width direction (rigidity against shearing deformation due to input from the outer side toward the inner side in the width direction during vehicle cornering) can be increased, and by setting it to 10° or more, as described later, the difference in the direction of inclination with the second width direction groove 5 can be made clearer, both of which can improve gripping performance. The inclination angle of the second portion 42 with respect to the tire circumferential direction is not particularly limited, but may be, for example, 10° to 15°.

Further, as illustrated, one second width direction groove 5 forming a pair extends from the outer side toward the inner side in the tire width direction and extends toward the other side in the tire circumferential direction. That is, the first width direction groove 4 and the second width direction groove 5 are inclined in mutually opposite directions in the tire circumferential direction with respect to the tire width direction.

The groove width (opening width) of the second width direction groove 5 is not particularly limited, but in view of the balance between drainage performance (compliance with regulations when used for racing tires; the same applies hereinafter) and the rigidity of the land portion, it may be, for example, 5 mm to 20 mm. The groove depth (maximum depth) of the second width direction groove 5 is not particularly limited, but in view of the balance between drainage performance and the rigidity of the land portion, it may be, for example, 5 to 8 mm. The inclination angle of the second width direction groove 5 with respect to the tire width direction is not particularly limited, but may be, for example, 5° to 15°. By setting it to 15° or less, the rigidity against input in the width direction (rigidity against shearing deformation due to input from the outer side toward the inner side in the width direction during vehicle cornering) can be increased, and by setting it to 5° or more, as described later, the difference in the direction of inclination with the first width direction groove 4 can be made clearer, both of which can improve gripping performance.

Here, the inner end in the tire width direction of one second width direction groove 5 forming a pair is positioned on the outer side in the tire width direction relative to the inner end in the tire width direction of one first width direction groove 4 forming a pair (in this example, the inner end in the tire width direction of the second portion 42). Although not particularly limited, it is preferable that the inner end in the tire width direction of one second width direction groove 5 forming a pair is positioned on the outer side in the tire width direction relative to the inner end in the tire width direction of one first width direction groove 4 forming a pair (in this example, the inner end in the tire width direction of the second portion 42) by a distance corresponding to 50% to 80% of the width in the tire width direction of the first width direction groove 4 (the width in the tire width direction when projected in the tire circumferential direction). In the illustrated example, the second width direction groove 5 (its outer end in the tire width direction) communicates with the tread edge TE on the vehicle-mounted outer side. In the illustrated example, one first width direction groove 4 forming a pair and one second width direction groove 5 forming a pair have an overlapping portion when projected in the tire circumferential direction. The width of this overlap is not particularly limited, but may be, for example, 20% to 50% of the width in the tire width direction of the first width direction groove 4 (the width in the tire width direction when projected in the tire circumferential direction).

At least a part of the first portion 41 or at least a part of the second portion 42 of the first width direction groove 4 has a chamfered portion at the opening to the tread surface 1. As a result, drainage performance at the time of new tire can be greatly ensured (when used for racing tires, compliance with regulations is further facilitated), and at the same time, compared to the case where the opening width is the same as the groove bottom, a decrease in rigidity can be suppressed and gripping performance can be ensured. The chamfered portion may be formed only on the first portion 41 (entire circumference or part thereof; not formed on the second portion 42). Alternatively, the chamfered portion may be formed only on the second portion 42 (entire circumference or part thereof; not formed on the first portion 41). Alternatively, chamfered portions may be formed on both the first portion 41 (entire circumference or part thereof) and the second portion 42 (entire circumference or part thereof). In this example, chamfered portions are formed on the entire circumference of the first portion 41 and the entire circumference of the second portion 42. Similarly, at least a part (entire circumference or part thereof; in this example, the entire circumference) of the second width direction groove 5 has a chamfered portion at the opening to the tread surface 1. Regarding the first width direction groove 4, in the reference state, it is preferable that the inclination angle of the tapered surface of the chamfered portion of the second portion 42 with respect to the tire radial direction is greater than the inclination angle of the tapered surface of the chamfered portion of the first portion 41 with respect to the tire radial direction. This is because the decrease in rigidity can be further suppressed when ensuring drainage performance at the time of new tire by the second portion 42.

Further, this tire has only two circumferential main grooves 2a and 2b in the vehicle-mounted inner land portion 3b, which is on the vehicle-mounted inner side. As a result, drainage performance and the rigidity of the land portion can be ensured in a well-balanced manner.

In the external land portion 3b1 of the vehicle-mounted inner land portion 3b, a plurality of third width direction grooves 6 extending in the tire width direction are arranged. The third width direction grooves 6 (their outer ends in the tire width direction) communicate with the tread edge TE. As a result, drainage performance can be improved. On the other hand, the third width direction grooves 6 (their inner ends in the tire width direction) do not communicate with the circumferential main groove 2a. As a result, the rigidity of the land portion can be ensured.

The groove width (opening width) of the third width direction groove 6 is not particularly limited, but in view of the balance between drainage performance (compliance with regulations when used for racing tires; the same applies hereinafter) and the rigidity of the land portion, it may be, for example, 10 mm to 25 mm. The groove depth (maximum depth) of the third width direction groove 6 is not particularly limited, but in view of the balance between drainage performance and the rigidity of the land portion, it may be, for example, 5 mm to 8 mm. The inclination angle of the third width direction groove 6 with respect to the tire width direction is not particularly limited, but may be, for example, 5° to 15°. By setting it to 15° or less, the rigidity against input in the width direction (rigidity against shearing deformation due to input from the outer side toward the inner side in the width direction during vehicle cornering) can be increased, and by setting it to 5° or more, it is possible to prevent the rigidity from becoming locally low in the tire circumferential direction.

It is preferable that a chamfered portion is also formed at least in part (entire circumference or part thereof) at the opening of the third width direction groove 6.

Further, on the inner side in the tire width direction of the circumferential main groove 2a, a plurality of notched portions 7 communicating with the circumferential main groove 2a are provided. As a result, the rigidity of the land portion provided with the notched portions 7 can be moderately relaxed to improve gripping performance. In addition, since the notched portions 7 are provided within the vehicle-mounted inner land portion 3b, they are less susceptible to the influence of lateral force during cornering.

The first width direction grooves 4 and the second width direction grooves 5 provided in the vehicle-mounted outermost land portion 3a, and the third width direction grooves 6 provided in the vehicle-mounted inner land portion 3b, preferably do not overlap each other when projected in the tire width direction, or only the chamfered portions overlap. This is because the balance of rigidity of the land portions in the tire circumferential direction can be achieved.

Hereinafter, the effects of the pneumatic tire of the first embodiment will be described.

The pneumatic tire of the first embodiment, first, has, in the vehicle-mounted outermost land portion 3a, which is the outermost land portion in the tire width direction on the vehicle-mounted outer side, a plurality of first width direction grooves 4 extending in the tire width direction and having at least one end (both ends in the illustrated example) terminated within the vehicle-mounted outermost land portion 3a, and a plurality of second width direction grooves 5 extending in the tire width direction. Therefore, the rigidity against input in the width direction (rigidity against shearing deformation due to input from the outer side toward the inner side in the width direction during vehicle cornering) can be increased to improve gripping performance.

Further, in the pneumatic tire of the first embodiment, one first width direction groove 4 forming a pair has a first portion 41 extending from the outer side toward the inner side in the tire width direction and extending toward one side in the tire circumferential direction, and one second width direction groove 5 forming a pair extends from the outer side toward the inner side in the tire width direction and extends toward the other side in the tire circumferential direction. As a result, for inputs from various directions, there are always two types of width direction grooves with mutually opposite inclination directions in the tire circumferential direction with respect to the tire width direction, so that the problem of the land portion being easily deformed in response to input from a specific direction can be solved, and gripping performance can be improved.

Furthermore, according to such a configuration, the first portion 41 and the second width direction groove 5 are more widely spaced apart in the tire circumferential direction on the outer side in the tire width direction, so that the area of the land portion on the outer side in the tire width direction can be sufficiently ensured to improve gripping performance.

On the other hand, considering only the direction of inclination, the first portion 41 and the second width direction groove 5 are closer to each other in the tire circumferential direction on the inner side in the tire width direction, but in the pneumatic tire of the first embodiment, since the inner end in the tire width direction of one second width direction groove 5 forming a pair is positioned on the outer side in the tire width direction relative to the inner end in the tire width direction of one first width direction groove 4 forming a pair, it is possible to avoid as much as possible the occurrence of a region where the first width direction groove 4 and the second width direction groove 5 approach each other in the tire circumferential direction, and even on the inner side in the tire width direction, the area of the land portion can be sufficiently ensured to improve gripping performance.

As described above, according to the pneumatic tire of the first embodiment, gripping performance can be improved.

Here, it is preferable that the second width direction groove 5 communicates with the tread edge on the vehicle-mounted outer side. This is because drainage performance can be further improved.

Further, it is preferable that one first width direction groove 4 forming a pair and one second width direction groove 5 forming a pair have an overlapping portion when projected in the tire circumferential direction. This is because, even considering the arrangement relationship with other grooves (in the example of FIG. 1, the circumferential main groove 2a), it becomes easier to sufficiently ensure the extension length of the width direction grooves.

One first width direction groove 4 further has a second portion 42 extending from the inner end in the tire width direction of the first portion 41 toward one side in the tire circumferential direction, and it is preferable that at least a part of the first portion 41 or at least a part of the second portion 42 has a chamfered portion at the opening to the tread surface. This is because drainage performance at the time of new tire can be further improved while suppressing a decrease in rigidity as much as possible.

In the reference state, it is preferable that the inclination angle of the tapered surface of the chamfered portion of the second portion 42 with respect to the tire radial direction is greater than the inclination angle of the tapered surface of the chamfered portion of the first portion 41 with respect to the tire radial direction. This is because drainage performance at the time of new tire can be further improved while suppressing a decrease in rigidity as much as possible.

It is preferable that only two circumferential main grooves 2a and 2b are provided in the vehicle-mounted inner land portion 3b, which is on the vehicle-mounted inner side. As a result, drainage performance and the rigidity of the land portion can be ensured in a well-balanced manner.

### (Second Embodiment)

Here, as the second embodiment, both the direction of inclination in the tire circumferential direction with respect to the tire width direction of the first portion of the first width direction groove and the direction of inclination in the tire circumferential direction with respect to the tire width direction of the second width direction groove may be opposite to those in the first embodiment described above. That is, the tire of the second embodiment has a basic configuration similar to that of the first embodiment described above, and has, on the tread surface, one or more circumferential main grooves extending in the tire circumferential direction, a plurality of land portions defined between the circumferential main groove and the tread edge or between the circumferential main grooves, and, in the vehicle-mounted outermost land portion, which is the outermost land portion in the tire width direction on the vehicle-mounted outer side, a plurality of first width direction grooves extending in the tire width direction and having at least one end (preferably both ends) terminated within the vehicle-mounted outermost land portion, and a plurality of second width direction grooves extending in the tire width direction, wherein the first width direction grooves and the second width direction grooves are alternately arranged in the tire circumferential direction while being spaced apart from each other in the tire circumferential direction, and one first width direction groove and one second width direction groove adjacent to the one first width direction groove on one side in the tire circumferential direction form a pair.

On the other hand, unlike the first embodiment described above, in the tire of the second embodiment, one first width direction groove forming a pair has a first portion extending from the inner side toward the outer side in the tire width direction and extending toward one side in the tire circumferential direction, and one second width direction groove forming a pair extends from the inner side toward the outer side in the tire width direction and extends toward the other side in the tire circumferential direction, and the outer end in the tire width direction of one second width direction groove forming a pair is positioned on the outer side in the tire width direction relative to the outer end in the tire width direction of one first width direction groove forming a pair.

Even in the tire of the second embodiment, first, since the vehicle-mounted outermost land portion, which is the outermost land portion in the tire width direction on the vehicle-mounted outer side, is provided with a plurality of first width direction grooves extending in the tire width direction and having at least one end (preferably both ends) terminated within the vehicle-mounted outermost land portion, and a plurality of second width direction grooves extending in the tire width direction, the rigidity against input in the width direction (rigidity against shearing deformation due to input from the outer side toward the inner side in the width direction during vehicle cornering situation) can be increased, thereby improving gripping performance.

Furthermore, in the pneumatic tire of the second embodiment, one of the first width direction grooves constituting a pair has a first portion extending from the inner side toward the outer side in the tire width direction and extending toward one side in the tire circumferential direction, and one of the second width direction grooves constituting a pair extends from the inner side toward the outer side in the tire width direction and extends toward the other side in the tire circumferential direction. As a result, for input from various directions, there are always two types of width direction grooves with extension directions (the inclination direction in the tire circumferential direction with respect to the tire width direction being opposite to each other), so it is possible to solve the problem that the land portion becomes easily deformable for input from a specific direction, and gripping performance can be improved.

Furthermore, according to such a configuration, the first portion and the second width direction groove have a larger clearance distance in the tire circumferential direction with each other as they are closer to the inner side in the tire width direction, so the area of the land portion on the inner side in the tire width direction can be sufficiently secured, thereby improving gripping performance.

On the other hand, considering only the direction of inclination, the first portion and the second width direction groove have a smaller clearance distance in the tire circumferential direction with each other as they are closer to the outer side in the tire width direction, but in the pneumatic tire of the second embodiment, since the outer end in the tire width direction of one of the second width direction grooves constituting a pair is positioned on the outer side in the tire width direction relative to the outer end in the tire width direction of one of the first width direction grooves constituting a pair, it is possible to avoid as much as possible the occurrence of regions where the first width direction groove and the second width direction groove approach each other in the tire circumferential direction, and even on the outer side in the tire width direction, the area of the land portion can be sufficiently secured, thereby improving gripping performance.

As described above, even with the pneumatic tire of the second embodiment, gripping performance can be improved.

Here, in the second embodiment, it is preferable that the second width direction grooves communicate with the tread edge on the vehicle-mounted outer side. This is because drainage performance can be further improved.

Also, in the second embodiment, it is preferable that one of the first width direction grooves constituting a pair and one of the second width direction grooves constituting a pair have an overlapping portion when projected in the tire circumferential direction. This is because, even considering the positional relationship with other grooves, it becomes easier to sufficiently secure the extension length of the width direction grooves.

In the second embodiment, one of the first width direction grooves further has a second portion extending from the inner end in the tire width direction of the first portion toward one side in the tire circumferential direction, and it is preferable that at least a part of the first portion or at least a part of the second portion has a chamfered portion at an opening to the tread surface. This is because, while further improving drainage performance when new, it is possible to suppress a decrease in rigidity as much as possible.

In the second embodiment, in the reference state, it is preferable that the inclination angle of the tapered surface of the chamfered portion of the second portion with respect to the tire radial direction is greater than the inclination angle of the tapered surface of the chamfered portion of the first portion with respect to the tire radial direction. This is because, while further improving drainage performance when new, it is possible to suppress a decrease in rigidity as much as possible.

In the second embodiment, it is preferable that the vehicle-mounted inner land portion, which becomes the inner side at the time of vehicle mounting, is provided with only two circumferential main grooves. As a result, drainage performance and the rigidity of the land portion can be secured in a well-balanced manner.

In the second embodiment, the dimensions and inclination angles of the first width direction groove (the first portion and the second portion) and the second width direction groove can be the same as those in the above first embodiment, except for the direction of inclination toward the tire circumferential direction with respect to the tire width direction. Similarly, the overlapping width in the tire width direction of the first width direction groove and the second width direction groove, and the clearance distance in the tire width direction between the outer ends, can also be the same as in the above first embodiment.

### (Third Embodiment)

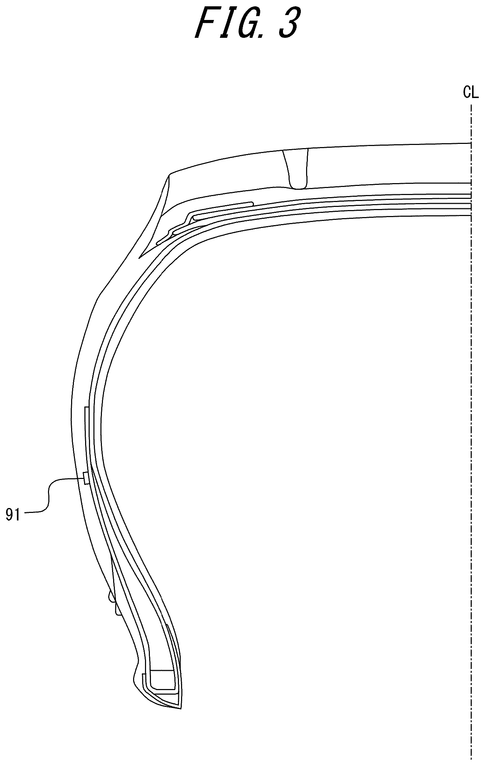

As illustrated in FIG. 3, this tire has at least one (two in the illustrated example) circumferential main groove 2 (2a, 2b) extending in the tire circumferential direction on the tread surface 1. This tire has a plurality of land portions 3 (3a, 3b (3b1, 3b2)) defined between the circumferential main groove 2 and the tread edge TE or between the circumferential main grooves 2 (2a, 2b). Specifically, on the vehicle-mounted outer side with the tire equatorial plane CL as the boundary, the vehicle-mounted outermost land portion 3a is defined by the circumferential main groove 2a and the tread edge TE. On the vehicle-mounted inner side with the tire equatorial plane CL as the boundary, the vehicle-mounted inner land portion 3b is defined by the circumferential main grooves 2a, 2b or by the circumferential main groove 2b and the tread edge TE. Between the circumferential main grooves 2a and 2b, the internal land portion 3b2 of the vehicle-mounted inner land portion is defined, and by the circumferential main groove 2a and the tread edge TE, the external land portion 3b1 of the vehicle-mounted inner land portion is defined.

This tire is provided, in the vehicle-mounted outermost land portion 3a, which is the outermost land portion in the tire width direction on the vehicle-mounted outer side, with a plurality of first width direction grooves 4 extending in the tire width direction and having at least one end (both ends in the illustrated example) terminated within the vehicle-mounted outermost land portion 3a, and a plurality of second width direction grooves 5 extending in the tire width direction and having at least one end (one end in the illustrated example) terminated within the vehicle-mounted outermost land portion 3a.

As illustrated, the first width direction grooves 4 and the second width direction grooves 5 are alternately arranged in the tire circumferential direction while being spaced apart from each other in the tire circumferential direction. In other words, one of the first width direction grooves 4 and one of the second width direction grooves 5 adjacent to the one first width direction groove 4 on one side in the tire circumferential direction form a pair, and a plurality of such pairs are provided at intervals in the tire circumferential direction. The pitch interval in the tire circumferential direction of the first width direction grooves 4 is not particularly limited, but may be, for example, 40 mm to 140 mm. The pitch interval in the tire circumferential direction of the second width direction grooves 5 is not particularly limited, but may be, for example, 40 mm to 140 mm. The shortest distance between the first width direction groove 4 and the second width direction groove 5 forming a pair is not particularly limited, but may be, for example, 15 mm to 60 mm.

One of the first width direction grooves 4 constituting a pair has a first portion 41 extending from the outer side toward the inner side in the tire width direction and extending toward one side in the tire circumferential direction. Furthermore, the first width direction groove 4 further has a second portion 42 extending from the inner end in the tire width direction of the first portion 41 toward one side in the tire circumferential direction. This second portion 42 allows drainage performance to be further ensured.

The groove width (opening width) of the first width direction groove 4 is not particularly limited, but in view of the balance between drainage performance (compliance with regulations when used for racing tires; the same applies hereinafter) and the rigidity of the land portion, it may be, for example, 5 mm to 20 mm. The groove depth (maximum depth) of the first width direction groove 4 is not particularly limited, but in view of the balance between drainage performance and the rigidity of the land portion, it may be, for example, 5 mm to 8 mm. The inclination angle of the first portion 41 with respect to the tire width direction is not particularly limited, but may be, for example, 10° to 20°. By setting it to 20° or less, the rigidity against input in the width direction (rigidity against shearing deformation due to input from the outer side toward the inner side in the width direction during vehicle cornering situation) can be increased, and by setting it to 10° or more, as described later, the difference in the direction of inclination with the second width direction groove 5 can be made clearer, both of which can improve gripping performance. The inclination angle of the second portion 42 with respect to the tire circumferential direction is not particularly limited, but may be, for example, 10° to 15°.

Furthermore, as illustrated, one of the second width direction grooves 5 constituting a pair extends from the outer side toward the inner side in the tire width direction and extends toward the other side in the tire circumferential direction. That is, the first width direction groove 4 and the second width direction groove 5 are inclined in mutually opposite directions in the tire circumferential direction with respect to the tire width direction.

The groove width (opening width) of the second width direction groove 5 is not particularly limited, but in view of the balance between drainage performance (compliance with regulations when used for racing tires; the same applies hereinafter) and the rigidity of the land portion, it may be, for example, 5 mm to 20 mm. The groove depth (maximum depth) of the second width direction groove 5 is not particularly limited, but in view of the balance between drainage performance and the rigidity of the land portion, it may be, for example, 5 mm to 8 mm. The inclination angle of the second width direction groove 5 with respect to the tire width direction is not particularly limited, but may be, for example, 5° to 15°. By setting it to 15° or less, the rigidity against input in the width direction (rigidity against shearing deformation due to input from the outer side toward the inner side in the width direction during vehicle cornering situation) can be increased, and by setting it to 5° or more, as described later, the difference in the direction of inclination with the first width direction groove 4 can be made clearer, both of which can improve gripping performance.

Here, the inner end in the tire width direction of one of the second width direction grooves 5 constituting a pair is positioned on the outer side in the tire width direction relative to the inner end in the tire width direction of one of the first width direction grooves 4 constituting a pair (in this example, the inner end in the tire width direction of the second portion 42). Although not particularly limited, it is preferable that the inner end in the tire width direction of one of the second width direction grooves 5 constituting a pair is positioned on the outer side in the tire width direction relative to the inner end in the tire width direction of one of the first width direction grooves 4 constituting a pair (in this example, the inner end in the tire width direction of the second portion 42) by a distance corresponding to 50% to 80% of the width in the tire width direction of the first width direction groove 4 (the width in the tire width direction when projected in the tire circumferential direction). In the illustrated example, the second width direction groove 5 (its outer end in the tire width direction) communicates with the tread edge TE on the vehicle-mounted outer side. In the illustrated example, one of the first width direction grooves 4 constituting a pair and one of the second width direction grooves 5 constituting a pair have an overlapping portion when projected in the tire circumferential direction. This overlapping width is not particularly limited, but may be, for example, 20% to 50% of the width in the tire width direction of the first width direction groove 4 (the width in the tire width direction when projected in the tire circumferential direction).

At least a part of the first portion 41 or at least a part of the second portion 42 has a chamfered portion at an opening to the tread surface 1. As a result, drainage performance can be greatly ensured when new (when used for racing tires, compliance with regulations is further facilitated), and on the other hand, compared to the case where the opening width is the same as the groove bottom, a decrease in rigidity can be suppressed and gripping performance can be ensured. The chamfered portion may be formed only on the first portion 41 (entire circumference or part thereof) (and not formed on the second portion 42). Alternatively, the chamfered portion may be formed only on the second portion 42 (entire circumference or part thereof) (and not formed on the first portion 41). Alternatively, the chamfered portion may be formed on both the first portion 41 (entire circumference or part thereof) and the second portion 42 (entire circumference or part thereof). In this example, the chamfered portion is formed on the entire circumference of the first portion 41 and the entire circumference of the second portion 42. Similarly, at least a part (entire circumference or part thereof; in this example, the entire circumference) of the second width direction groove 5 has a chamfered portion at an opening to the tread surface 1. Regarding the first width direction groove 4, in the reference state, it is preferable that the inclination angle of the tapered surface of the chamfered portion of the second portion 42 with respect to the tire radial direction is greater than the inclination angle of the tapered surface of the chamfered portion of the first portion 41 with respect to the tire radial direction. This is because, when ensuring drainage performance when new by the second portion 42, a decrease in rigidity can be further suppressed.

Furthermore, this tire is provided, in the vehicle-mounted inner land portion 3b, which becomes the inner side at the time of vehicle mounting, with only two circumferential main grooves 2a and 2b. As a result, drainage performance and the rigidity of the land portion can be secured in a well-balanced manner.

In the external land portion 3b1 of the vehicle-mounted inner land portion 3b, a plurality of third width direction grooves 6 extending in the tire width direction are arranged. The third width direction grooves 6 (their outer ends in the tire width direction) communicate with the tread edge TE. As a result, drainage performance can be improved. On the other hand, the third width direction grooves 6 (their inner ends in the tire width direction) do not communicate with the circumferential main groove 2a. As a result, the rigidity of the land portion can be ensured. Between the third width direction grooves 6 in the tire circumferential direction, fourth width direction grooves 9 are further arranged. As a result, drainage performance can be further improved. The fourth width direction grooves 9 have both ends terminated within the external land portion 3b1. As a result, the rigidity of the land portion can be ensured. In this example, the groove width of the fourth width direction grooves 9 is smaller than the groove width of the third width direction grooves 6.

The groove width (opening width) of the third width direction grooves 6 is not particularly limited, but in view of the balance between drainage performance (compliance with regulations when used for racing tires; the same applies hereinafter) and the rigidity of the land portion, it may be, for example, 10 mm to 25 mm. The groove depth (maximum depth) of the third width direction grooves 6 is not particularly limited, but in view of the balance between drainage performance and the rigidity of the land portion, it may be, for example, 5 mm to 8 mm. The inclination angle of the third width direction grooves 6 with respect to the tire width direction is not particularly limited, but may be, for example, 5° to 15°. By setting it to 15° or less, the rigidity against input in the width direction (rigidity against shearing deformation due to input from the outer side toward the inner side in the width direction during vehicle cornering situation) can be increased, and by setting it to 5° or more, it is possible to prevent the rigidity from becoming locally low in the tire circumferential direction.

The groove width (opening width) of the fourth width direction grooves 9 is not particularly limited, but in view of the balance between drainage performance (compliance with regulations when used for racing tires; the same applies hereinafter) and the rigidity of the land portion, it may be, for example, 2 mm to 6 mm. The groove depth (maximum depth) of the fourth width direction grooves 9 is not particularly limited, but in view of the balance between drainage performance and the rigidity of the land portion, it may be, for example, 5 mm to 8 mm. The inclination angle of the fourth width direction grooves 9 with respect to the tire width direction is not particularly limited, but may be, for example, 5° to 15°. By setting it to 15° or less, the rigidity against input in the width direction (rigidity against shearing deformation due to input from the outer side toward the inner side in the width direction during vehicle cornering situation) can be increased, and by setting it to 5° or more, it is possible to prevent the rigidity from becoming locally low in the tire circumferential direction.

It is preferable that at least a part (entire circumference or part thereof) of the openings of the third width direction grooves 6 and the fourth width direction grooves 9 is provided with a chamfered portion.

Furthermore, on the inner side in the tire width direction of the circumferential main groove 2a, a plurality of notches 7 communicating with the circumferential main groove 2a are provided. As a result, the rigidity of the land portion provided with the notches 7 can be moderately relaxed, thereby improving gripping performance. In addition, since the notches 7 are provided within the vehicle-mounted inner land portion 3b, they are less susceptible to the influence of lateral force during cornering.

The first width direction grooves 4 and the second width direction grooves 5 provided in the vehicle-mounted outermost land portion 3a and the third width direction grooves 6 provided in the vehicle-mounted inner land portion 3b are preferably arranged so as not to overlap each other when projected in the tire width direction, or only the chamfered portions overlap. This is because the balance of rigidity of the land portion in the tire circumferential direction can be achieved. Similarly, the first width direction grooves 4 and the second width direction grooves 5 provided in the vehicle-mounted outermost land portion 3a and the fourth width direction grooves 9 provided in the vehicle-mounted inner land portion 3b are preferably arranged so as not to overlap each other when projected in the tire width direction, or only the chamfered portions overlap.

This tire is further provided, in the vehicle-mounted outermost land portion 3a, with a shallow groove 8 having one end communicating with the other end of the first width direction groove 4. The other end of the shallow groove 8 communicates with the circumferential main groove 2b. The groove depth (maximum depth) of the shallow groove 8 is shallower than the groove depth (maximum depth) of the first width direction groove 4.

The groove depth (maximum depth) of the shallow groove 8 is preferably 1.0 mm or more and 2.5 mm or less. By setting it to 1.0 mm or more, drainage performance can be further improved, and by setting it to 2.5 mm or less, a decrease in the rigidity of the vehicle-mounted outermost land portion 3a can be suppressed. The groove width (opening width) of the shallow groove 8 is preferably 3.0 mm to 10.0 mm. By setting it to 3.0 mm or more, drainage performance can be further improved, and by setting it to 10.0 mm or less, a decrease in the rigidity of the vehicle-mounted outermost land portion 3a can be suppressed.

The shallow groove 8 extends from the outer side toward the inner side in the tire width direction and extends toward one side in the tire circumferential direction. The shallow groove 8 preferably extends at an inclination angle of 40° to 60° with respect to the tire circumferential direction. By setting it to 40° or more, it is possible to suppress a local decrease in the rigidity of the land portion due to the formation of an acute angle portion, and by setting it to 60° or less, drainage performance can be further improved.

The shallow groove 8 preferably communicates with the end (in this example, the kick-out side) on one side in the tire circumferential direction of the first width direction groove 4 (in the illustrated example, the second portion 42). This is because water that has entered the first width direction groove 4 can be drained to the circumferential main groove 2a via the shallow groove 8, thereby further improving drainage performance.

In this example, the first width direction grooves 4, the second width direction grooves 5, and the shallow grooves 8, as described above, are provided only in the vehicle-mounted outermost land portion 3a when mounted on a vehicle.

Hereinafter, the effects of the pneumatic tire according to the third embodiment will be described.

The pneumatic tire of the third embodiment, first, has, in the vehicle-mounted outermost land portion 3a, which is the outermost land portion in the tire width direction on the vehicle-mounted outer side, a plurality of first width direction grooves 4 extending in the tire width direction and having at least one end (in the illustrated example, both ends) terminated within the vehicle-mounted outermost land portion 3a, and a plurality of second width direction grooves 5 extending in the tire width direction and having at least one end (in the illustrated example, one end) terminated within the vehicle-mounted outermost land portion 3a.

Therefore, rigidity against input in the width direction (rigidity against shearing deformation due to input from the outer side toward the inner side in the width direction during vehicle cornering situation) can be increased, thereby improving gripping performance.

Further, in the pneumatic tire of the third embodiment, one of the first width direction grooves 4 forming a pair has a first portion 41 extending from the outer side toward the inner side in the tire width direction and extending toward one side in the tire circumferential direction, and one of the second width direction grooves 5 forming a pair extends from the outer side toward the inner side in the tire width direction and extends toward the other side in the tire circumferential direction.

As a result, for input from various directions, there are always two types of width direction grooves with extension directions (inclination directions toward the tire circumferential direction relative to the tire width direction) that are opposite to each other, so it is possible to solve the problem that the land portion becomes easily deformable for input from a specific direction, and gripping performance can be improved.

Furthermore, according to such a configuration, the first portion 41 and the second width direction groove 5 have a larger clearance distance in the tire circumferential direction as they are closer to the outer side in the tire width direction, so the area of the land portion on the outer side in the tire width direction can be sufficiently secured, thereby improving gripping performance.

On the other hand, considering only the direction of inclination, the first portion 41 and the second width direction groove 5 have a smaller clearance distance in the tire circumferential direction as they are closer to the inner side in the tire width direction, but in the pneumatic tire of the third embodiment, the inner end in the tire width direction of one of the second width direction grooves 5 forming a pair is positioned on the outer side in the tire width direction relative to the inner end in the tire width direction of one of the first width direction grooves 4 forming a pair.

Therefore, it is possible to avoid generating a region where the first width direction groove 4 and the second width direction groove 5 approach each other in the tire circumferential direction as much as possible, and even on the inner side in the tire width direction, the area of the land portion can be sufficiently secured, thereby improving gripping performance.

As described above, according to the pneumatic tire of the third embodiment, gripping performance can be improved.

Here, in a tire such as that of the third embodiment, the first width direction groove 4 is closed within the contact patch, and when the air in the closed space is compressed by a load and released, a pumping sound may be generated, resulting in pattern noise.

In contrast, the tire of the third embodiment further includes a shallow groove 8 with one end communicating with the other end of the first width direction groove 4, and the other end of the shallow groove 8 communicates with the circumferential main groove 2b.

As a result, when the first width direction groove 4 is positioned within the contact patch, the shallow groove 8 functions as an air escape path, so the occurrence of the above pattern noise can be suppressed.

Furthermore, drainage by the shallow groove 8 itself, and effective drainage due to the communication between the circumferential main groove 2b and the first width direction groove 4 via the shallow groove 8, can further improve drainage performance.

In addition, since the groove depth of such a shallow groove 8 is shallower than the groove depth of the first width direction groove 4, a decrease in the rigidity of the land portion can also be suppressed.

It should be noted that, as wear progresses, the shallow groove 8 may disappear, but as wear progresses, the groove depth of the first width direction groove 4 also becomes shallower, so the pumping sound that may be generated is also reduced.

Here, it is preferable that the second width direction grooves 5 communicate with the tread edge on the vehicle-mounted outer side.

This is because drainage performance can be further improved.

Further, it is preferable that one of the first width direction grooves 4 forming a pair and one of the second width direction grooves 5 forming a pair have an overlapping portion when projected in the tire circumferential direction.

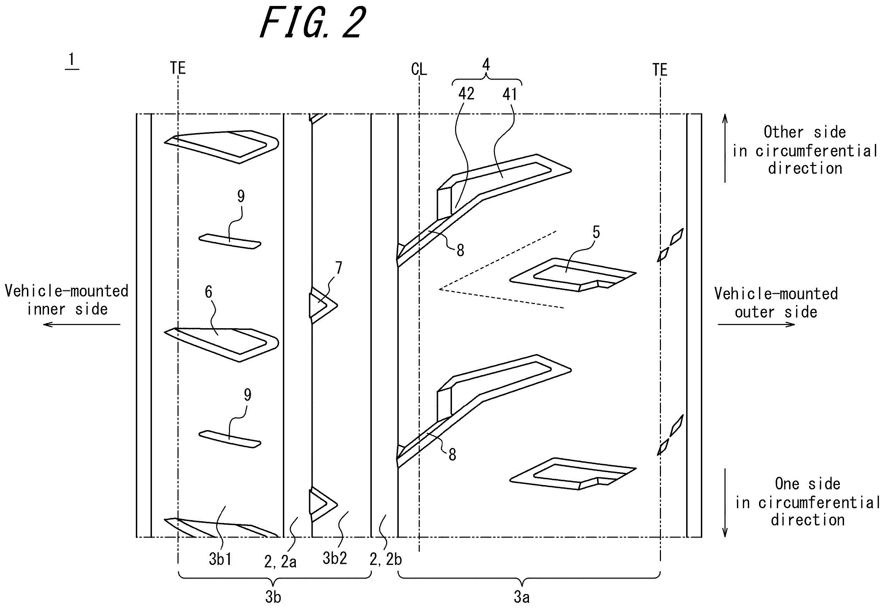

This is because, even considering the arrangement relationship with other grooves (in the example of FIG. 2, the circumferential main groove 2a), it becomes easier to sufficiently secure the extension length of the width direction grooves.

One of the first width direction grooves 4 further has a second portion 42 extending from the inner end in the tire width direction of the first portion 41 toward one side in the tire circumferential direction, and at least a part of the first portion 41 or at least a part of the second portion 42 preferably has a chamfered portion at the opening to the tread surface.

This is because, while further improving drainage performance when new, a decrease in rigidity can be suppressed as much as possible.

In the reference state, it is preferable that the inclination angle of the tapered surface of the chamfered portion of the second portion 42 with respect to the tire radial direction is greater than the inclination angle of the tapered surface of the chamfered portion of the first portion 41 with respect to the tire radial direction.

This is because, while further improving drainage performance when new, a decrease in rigidity can be suppressed as much as possible.

It is preferable that the vehicle-mounted inner land portion 3b, which becomes the inner side when mounted on a vehicle, is provided with only two circumferential main grooves 2a and 2b.

As a result, drainage performance and the rigidity of the land portion can be secured in a well-balanced manner.

### (Fourth Embodiment)

Here, as the fourth embodiment, both the direction of inclination toward the tire circumferential direction with respect to the tire width direction of the first portion of the first width direction groove and the direction of inclination toward the tire circumferential direction with respect to the tire width direction of the second width direction groove may be opposite to those in the above third embodiment.

That is, the tire of the fourth embodiment has a basic configuration similar to the above third embodiment, and has, on the tread surface, at least one circumferential main groove extending in the tire circumferential direction, a plurality of land portions defined between the circumferential main groove and the tread edge or between the circumferential main grooves, and, in the vehicle-mounted outermost land portion, which is the outermost land portion in the tire width direction on the vehicle-mounted outer side, a plurality of first width direction grooves extending in the tire width direction and having at least one end (for example, both ends) terminated within the vehicle-mounted outermost land portion, and a plurality of second width direction grooves extending in the tire width direction and having at least one end (for example, one end) terminated within the vehicle-mounted outermost land portion.

The first width direction grooves and the second width direction grooves are alternately arranged in the tire circumferential direction while being spaced apart from each other in the tire circumferential direction, and one of the first width direction grooves and one of the second width direction grooves adjacent to the one first width direction groove on one side in the tire circumferential direction form a pair.

Further, a shallow groove 8 with one end communicating with the other end of the first width direction groove 4 is further provided, the groove depth of the shallow groove 8 is shallower than the groove depth of the first width direction groove 4, and the other end of the shallow groove 8 communicates with the circumferential main groove 2a.

In addition, the shallow groove 8 extends from the outer side toward the inner side in the tire width direction and extends toward the other side in the tire circumferential direction.

On the other hand, unlike the above third embodiment, in the tire of the fourth embodiment, one of the first width direction grooves forming a pair has a first portion extending from the inner side toward the outer side in the tire width direction and extending toward one side in the tire circumferential direction, and one of the second width direction grooves forming a pair extends from the inner side toward the outer side in the tire width direction and extends toward the other side in the tire circumferential direction, and the outer end in the tire width direction of one of the second width direction grooves forming a pair is positioned on the outer side in the tire width direction relative to the outer end in the tire width direction of one of the first width direction grooves forming a pair.

Even in the tire of the fourth embodiment, first, in the vehicle-mounted outermost land portion, which is the outermost land portion in the tire width direction on the vehicle-mounted outer side, a plurality of first width direction grooves extending in the tire width direction and having at least one end (for example, both ends) terminated within the vehicle-mounted outermost land portion, and a plurality of second width direction grooves extending in the tire width direction and having at least one end (for example, one end) terminated within the vehicle-mounted outermost land portion are provided.

Therefore, rigidity against input in the width direction (rigidity against shearing deformation due to input from the outer side toward the inner side in the width direction during vehicle cornering situation) can be increased, thereby improving gripping performance.

Further, in the pneumatic tire of the fourth embodiment, one of the first width direction grooves forming a pair has a first portion extending from the inner side toward the outer side in the tire width direction and extending toward one side in the tire circumferential direction, and one of the second width direction grooves forming a pair extends from the inner side toward the outer side in the tire width direction and extends toward the other side in the tire circumferential direction.

As a result, for input from various directions, there are always two types of width direction grooves with extension directions (inclination directions toward the tire circumferential direction relative to the tire width direction) that are opposite to each other, so it is possible to solve the problem that the land portion becomes easily deformable for input from a specific direction, and gripping performance can be improved.

Furthermore, according to such a configuration, the first portion and the second width direction groove have a larger clearance distance in the tire circumferential direction as they are closer to the inner side in the tire width direction, so the area of the land portion on the inner side in the tire width direction can be sufficiently secured, thereby improving gripping performance.

On the other hand, considering only the direction of inclination, the first portion and the second width direction groove have a smaller clearance distance in the tire circumferential direction as they are closer to the outer side in the tire width direction, but in the pneumatic tire of the fourth embodiment, the outer end in the tire width direction of one of the second width direction grooves forming a pair is positioned on the outer side in the tire width direction relative to the outer end in the tire width direction of one of the first width direction grooves forming a pair.

Therefore, it is possible to avoid generating a region where the first width direction groove and the second width direction groove approach each other in the tire circumferential direction as much as possible, and even on the outer side in the tire width direction, the area of the land portion can be sufficiently secured, thereby improving gripping performance.

As described above, even with the pneumatic tire of the fourth embodiment, gripping performance can be improved.

Further, even in the tire of the fourth embodiment, a shallow groove 8 with one end communicating with the other end of the first width direction groove 4 is further provided, and the other end of the shallow groove 8 communicates with the circumferential main groove 2a.

As a result, when the first width direction groove 4 is positioned within the contact patch, the shallow groove 8 functions as an air escape path, so the occurrence of the above pattern noise can be suppressed.

Furthermore, drainage by the shallow groove 8 itself, and effective drainage due to the communication between the circumferential main groove 2b and the first width direction groove 4 via the shallow groove 8, can further improve drainage performance.

In addition, since the groove depth of such a shallow groove 8 is shallower than the groove depth of the first width direction groove 4, a decrease in the rigidity of the land portion can also be suppressed.

It should be noted that, as wear progresses, the shallow groove 8 may disappear, but as wear progresses, the groove depth of the first width direction groove 4 also becomes shallower, so the pumping sound that may be generated is also reduced.

In the fourth embodiment as well, it is preferable that the groove depth (maximum depth) of the shallow groove 8 is 1.0 mm or more and 2.5 mm or less.

By making it 1.0 mm or more, drainage performance can be further improved, while by making it 2.5 mm or less, a decrease in the rigidity of the vehicle-mounted outermost land portion 3a can be suppressed.

It is preferable that the groove width (opening width) of the shallow groove 8 is 3.0 mm to 10.0 mm.

By making it 3.0 mm or more, drainage performance can be further improved, while by making it 10.0 mm or less, a decrease in the rigidity of the vehicle-mounted outermost land portion 3a can be suppressed.

In the fourth embodiment as well, it is preferable that the shallow groove 8 extends at an inclination angle of 40° to 60° with respect to the tire circumferential direction.

By making it 40° or more, a decrease in the rigidity of the land portion due to the formation of an acute angle portion can be suppressed, while by making it 60° or less, drainage performance can be further improved.

In the fourth embodiment as well, it is preferable that the shallow groove 8 communicates with the end on one side in the tire circumferential direction (in this example, the kick-out side) of the first width direction groove 4 (in the illustrated example, the second portion 42).

This is because water that has entered the first width direction groove 4 is promoted to be drained to the circumferential main groove 2b via the shallow groove 8, thereby further improving drainage performance.

Even in the fourth embodiment, it is preferable that the first width direction grooves 4, the second width direction grooves 5, and the shallow grooves 8, as described above, are provided only in the vehicle-mounted outermost land portion 3a.

Here, in the fourth embodiment, it is preferable that the second width direction grooves communicate with the tread edge on the vehicle-mounted outer side.

This is because drainage performance can be further improved.

Further, in the fourth embodiment, it is preferable that one of the first width direction grooves forming a pair and one of the second width direction grooves forming a pair have an overlapping portion when projected in the tire circumferential direction.

This is because, even considering the arrangement relationship with other grooves, it becomes easier to sufficiently secure the extension length of the width direction grooves.

In the fourth embodiment, one of the first width direction grooves further has a second portion extending from the inner end in the tire width direction of the first portion toward one side in the tire circumferential direction, and at least a part of the first portion or at least a part of the second portion preferably has a chamfered portion at the opening to the tread surface.

This is because, while further improving drainage performance when new, a decrease in rigidity can be suppressed as much as possible.

In the fourth embodiment, in the reference state, it is preferable that the inclination angle of the tapered surface of the chamfered portion of the second portion with respect to the tire radial direction is greater than the inclination angle of the tapered surface of the chamfered portion of the first portion with respect to the tire radial direction.

This is because, while further improving drainage performance when new, a decrease in rigidity can be suppressed as much as possible.

In the fourth embodiment, it is preferable that the vehicle-mounted inner land portion, which becomes the inner side when mounted on a vehicle, is provided with only two circumferential main grooves.

As a result, drainage performance and the rigidity of the land portion can be secured in a well-balanced manner.

In the fourth embodiment, the dimensions and inclination angles of the first width direction groove (first portion, second portion) and the second width direction groove can be the same as those in the above third embodiment, except for the direction of inclination toward the tire circumferential direction with respect to the tire width direction.

Similarly, the overlapping width in the tire width direction of the first width direction groove and the second width direction groove, and the clearance distance in the tire width direction between the outer ends, can also be the same as in the above third embodiment.

Hereinafter, a case in which a communication device is provided in the tire will be described. FIG. 3 is a diagram for explaining an example of the arrangement of the communication device. As illustrated in FIG. 3, this tire may be provided with an RF tag as the communication device 91. The RF tag includes an IC chip and an antenna. The RF tag may, for example, be arranged sandwiched between positions of a plurality of members of the same or different types constituting the tire. By doing so, it becomes easy to attach the RF tag during tire production, and productivity of tires provided with the RF tag can be improved. In this example, the RF tag may, for example, be arranged sandwiched between the bead filler and another member adjacent to the bead filler. The RF tag may also be embedded in any member constituting the tire. By doing so, compared to the case where it is arranged sandwiched between a plurality of members constituting the tire, the load applied to the RF tag can be reduced. As a result, the durability of the RF tag can be improved. In this example, the RF tag may, for example, be embedded in a rubber member such as tread rubber or side rubber. It is preferable that the RF tag is not arranged at a position that becomes a boundary of members having different rigidity in the peripheral length direction, which is the direction along the outer surface of the tire in a cross-sectional view in the tire width direction. By doing so, the RF tag is not arranged at a position where strain is likely to concentrate due to a rigidity step. Therefore, the load applied to the RF tag can be reduced. As a result, the durability of the RF tag can be improved. In this example, it is preferable that the RF tag is not arranged at a position that becomes a boundary between the end of the carcass in a cross-sectional view in the tire width direction and a member (such as side rubber) adjacent to the end of the carcass. The number of RF tags is not particularly limited. The tire may be provided with only one RF tag, or may be provided with two or more RF tags. Here, as an example of the communication device, an RF tag is illustrated and described, but a communication device different from an RF tag may also be used.

The RF tag may, for example, be arranged in the tread portion of the tire. By doing so, the RF tag is not damaged by a side cut of the tire. The RF tag may, for example, be arranged in the tread central portion in the tire width direction. The tread central portion is a position in the tread portion where deflection is less likely to concentrate. By doing so, the load applied to the RF tag can be reduced. As a result, the durability of the RF tag can be improved. Further, it is possible to suppress a difference in communication performance with the RF tag from both outer sides of the tire in the tire width direction. In this example, the RF tag may, for example, be arranged within a range of 1/2 of the tread width centered on the tire equator in the tire width direction. The RF tag may, for example, be arranged at the tread edge in the tire width direction. If the position of the reader communicating with the RF tag is predetermined, the RF tag may, for example, be arranged at one tread edge on the side closer to the reader. In this example, the RF tag may, for example, be arranged within a range of 1/4 of the tread width with the tread edge as the outer end in the tire width direction.

The RF tag may, for example, be disposed on the tire cavity side of the carcass, which includes at least one carcass ply spanning between the bead portions. By doing so, the RF tag becomes less susceptible to damage from external impacts to the tire, side cuts, or punctures by nails. As one example, the RF tag may be disposed in close contact with the surface of the carcass on the tire cavity side. As another example, when there is another member on the tire cavity side of the carcass, the RF tag may be disposed, for example, between the carcass and the other member located on the tire cavity side of the carcass. As an example of another member located on the tire cavity side of the carcass, an inner liner forming the inner surface of the tire may be mentioned. As another example, the RF tag may be attached to the inner surface of the tire facing the tire cavity. By configuring the RF tag to be attached to the inner surface of the tire, attachment of the RF tag to the tire and inspection or replacement of the RF tag become easier. That is, the attachability and maintainability of the RF tag can be improved. Furthermore, by attaching the RF tag to the inner surface of the tire, compared to a configuration in which the RF tag is embedded inside the tire, it is possible to prevent the RF tag from becoming a nucleus of tire failure. In addition, when the carcass includes a plurality of carcass plies and there is a position where the plurality of carcass plies are stacked, the RF tag may be disposed between the stacked carcass plies.

The RF tag may, for example, be disposed on the outer side in the tire radial direction of the belt, which includes at least one belt ply in the tread portion of the tire. As one example, the RF tag may be disposed in close contact with the belt on the outer side in the tire radial direction with respect to the belt. As another example, when a belt reinforcement layer is provided, the RF tag may be disposed in close contact with the belt reinforcement layer on the outer side in the tire radial direction with respect to the belt reinforcement layer. As another example, the RF tag may be embedded in the tread rubber on the outer side in the tire radial direction with respect to the belt. By disposing the RF tag in the tread portion of the tire on the outer side in the tire radial direction with respect to the belt, communication with the RF tag from the outside of the tire in the tire radial direction is less likely to be hindered by the belt. Therefore, communication with the RF tag from the outside of the tire in the tire radial direction can be improved. Furthermore, the RF tag may, for example, be disposed on the inner side in the tire radial direction with respect to the belt in the tread portion of the tire. By doing so, the outer side in the tire radial direction of the RF tag is covered by the belt, so the RF tag becomes less susceptible to damage from impacts or nail punctures from the tread surface. As one example, the RF tag may be disposed in the tread portion of the tire between the belt and the carcass located on the inner side in the tire radial direction with respect to the belt. Furthermore, when the belt includes a plurality of belt plies, the RF tag may be disposed in the tread portion of the tire between any two belt plies. By doing so, the outer side in the tire radial direction of the RF tag is covered by at least one belt ply, so the RF tag becomes less susceptible to damage from impacts or nail punctures from the tread surface.

The RF tag may, for example, be disposed at a position of the sidewall portion or bead portion of the tire. The RF tag may, for example, be disposed in the sidewall portion or bead portion on one side, which is closer to a reader capable of communicating with the RF tag. By doing so, communication between the RF tag and the reader can be enhanced. As one example, the RF tag may be disposed between the carcass and the side rubber, or between the tread rubber and the side rubber. The RF tag may, for example, be disposed, in the tire radial direction, between the position of the tire maximum width and the position of the tread surface. By doing so, compared to a configuration in which the RF tag is disposed on the inner side in the tire radial direction relative to the position of the tire maximum width, communication with the RF tag from the outside of the tire in the tire radial direction can be enhanced. The RF tag may, for example, be disposed on the inner side in the tire radial direction relative to the position of the tire maximum width. By doing so, the RF tag is disposed near the bead portion, which has high rigidity. Therefore, the load applied to the RF tag can be reduced. As a result, the durability of the RF tag can be improved. As one example, the RF tag may be disposed at a position adjacent to the bead core in the tire radial direction or tire width direction. The vicinity of the bead core is less likely to concentrate strain. Therefore, the load applied to the RF tag can be reduced. As a result, the durability of the RF tag can be improved. In particular, it is preferable that the RF tag be disposed on the inner side in the tire radial direction relative to the position of the tire maximum width and on the outer side in the tire radial direction relative to the bead core of the bead portion. By doing so, the durability of the RF tag can be improved, and communication between the RF tag and the reader is less likely to be hindered by the bead core, thereby enhancing the communication performance of the RF tag. Furthermore, when the side rubber is composed of a plurality of rubber members of the same or different types that are adjacent in the tire radial direction, the RF tag may be sandwiched and disposed between the plurality of rubber members constituting the side rubber.

The RF tag may be sandwiched and disposed between the bead filler and a member adjacent to the bead filler. By doing so, the RF tag can be disposed at a position where strain is less likely to concentrate due to the arrangement of the bead filler. Therefore, the load applied to the RF tag can be reduced. As a result, the durability of the RF tag can be improved.

The RF tag may, for example, be sandwiched and disposed between the bead filler and the carcass. The portion of the carcass that sandwiches the RF tag together with the bead filler may be located on the outer side in the tire width direction with respect to the bead filler, or may be located on the inner side in the tire width direction. When the portion of the carcass that sandwiches the RF tag together with the bead filler is located on the outer side in the tire width direction with respect to the bead filler, the load applied to the RF tag due to impacts or damage from the outside of the tire in the tire width direction can be further reduced. As a result, the durability of the RF tag can be further improved. Furthermore, the bead filler may include a portion disposed adjacent to the side rubber. In such a case, the RF tag may be sandwiched and disposed between the bead filler and the side rubber. Furthermore, the bead filler may include a portion disposed adjacent to the rubber chafer. In such a case, the RF tag may be sandwiched and disposed between the bead filler and the rubber chafer.

The RF tag may, for example, be sandwiched and disposed between the rubber chafer and the side rubber. By doing so, the RF tag can be disposed at a position where strain is less likely to concentrate due to the arrangement of the rubber chafer. Therefore, the load applied to the RF tag can be reduced. As a result, the durability of the RF tag can be improved. The RF tag may, for example, be sandwiched and disposed between the rubber chafer and the carcass. By doing so, the load applied to the RF tag due to impacts or damage from the rim can be reduced. Therefore, the durability of the RF tag can be improved.

The RF tag may be sandwiched and disposed between the wire chafer and another member adjacent to the wire chafer on the inner or outer side in the tire width direction. By doing so, the position of the RF tag becomes less likely to fluctuate during tire deformation. Therefore, the load applied to the RF tag during tire deformation can be reduced. As a result, the durability of the RF tag can be improved. The other member adjacent to the wire chafer on the inner or outer side in the tire width direction may, for example, be a rubber member such as a rubber chafer. Furthermore, the other member adjacent to the wire chafer on the inner or outer side in the tire width direction may, for example, be the carcass.

A belt reinforcement layer may further be provided on the outer side in the radial direction of the belt. For example, the belt reinforcement layer may be formed by continuously spirally winding cords made of polyethylene terephthalate in the tire circumferential direction. Here, the cords may be subjected to adhesive treatment under a tension of 6.9×10-2 N/tex or more, and may have an elastic modulus of 2.5 mN/dtex·% or more at a load of 29.4 N measured at 160 °C. Furthermore, the belt reinforcement layer may be disposed so as to cover the entire belt or only both end portions of the belt. Furthermore, the winding density per unit width of the belt reinforcement layer may differ depending on the position in the width direction. By doing so, road noise and flat spots can be reduced without decreasing high-speed durability.

### REFERENCE SIGNS LIST

1: tread surface,
2, 2a, 2b: circumferential main groove,
3: land portion,
3a: vehicle-mounted outermost land portion,
3b: vehicle-mounted inner land portion,
3b1: external land portion of vehicle-mounted inner land portion,
3b2: internal land portion of vehicle-mounted inner land portion,
4: first width direction groove,
41: first portion,
42: second portion,
5: second width direction groove,
6: third width direction groove,
7: notch,
8: shallow groove,
9: fourth width direction groove,
91: communication device,
CL: tire equatorial plane,
TE: tread edge

## Claims

1. A pneumatic tire having at least one circumferential main groove extending in a tire circumferential direction on a tread surface, wherein a plurality of land portions are defined between the circumferential main groove and a tread edge or between the circumferential main grooves,
a vehicle-mounted outermost land portion, which is the outermost land portion in a tire width direction on the vehicle-mounted outer side, is provided with a plurality of first width direction grooves extending in the tire width direction and having at least one end terminated within the vehicle-mounted outermost land portion, and a plurality of second width direction grooves extending in the tire width direction,
the first width direction grooves and the second width direction grooves are alternately arranged in the tire circumferential direction while being spaced apart from each other in the tire circumferential direction,
one of the first width direction grooves and one of the second width direction grooves adjacent to the one first width direction groove on one side in the tire circumferential direction form a pair,
the one first width direction groove of the pair has a first portion extending from the outer side toward the inner side in the tire width direction and extending toward one side in the tire circumferential direction,
the one second width direction groove of the pair extends from the outer side toward the inner side in the tire width direction and extends toward the other side in the tire circumferential direction,
and an inner end in the tire width direction of the one second width direction groove of the pair is positioned on the outer side in the tire width direction relative to an inner end in the tire width direction of the one first width direction groove of the pair.

2. The pneumatic tire according to claim 1, wherein both ends of the first width direction grooves are terminated within the vehicle-mounted outermost land portion.

3. The pneumatic tire according to claim 1 or 2, wherein the second width direction grooves communicate with the tread edge on the vehicle-mounted outer side.

4. The pneumatic tire according to any one of claims 1 to 3, wherein the one first width direction groove of the pair and the one second width direction groove of the pair have an overlapping portion when projected in the tire circumferential direction.

5. The pneumatic tire according to any one of claims 1 to 4, wherein the one first width direction groove further has a second portion extending from an inner end in the tire width direction of the first portion toward one side in the tire circumferential direction, and at least a part of the first portion or at least a part of the second portion has a chamfered portion at an opening to the tread surface.

6. The pneumatic tire according to claim 5, wherein, in a reference state in which the pneumatic tire is mounted on an applicable rim, filled with a prescribed internal pressure, and unloaded, an inclination angle of a tapered surface of the chamfered portion of the second portion with respect to the tire radial direction is greater than an inclination angle of a tapered surface of the chamfered portion of the first portion with respect to the tire radial direction.

7. The pneumatic tire according to any one of claims 1 to 6, wherein the first width direction grooves each have one end terminated within the vehicle-mounted outermost land portion, the second width direction grooves each have at least one end terminated within the vehicle-mounted outermost land portion, shallow grooves are further provided with one end communicating with the other end of the first width direction grooves, a groove depth of the shallow grooves is shallower than a groove depth of the first width direction grooves, and the other end of the shallow grooves communicates with the circumferential main groove.

8. The pneumatic tire according to claim 7, wherein the groove depth of the shallow grooves is 2.5 mm or less.

9. The pneumatic tire according to claim 7 or 8, wherein the shallow grooves extend at an inclination angle of 40° to 60° with respect to the tire circumferential direction.

10. The pneumatic tire according to any one of claims 7 to 9, wherein the shallow grooves communicate with an end on one side in the tire circumferential direction of the first width direction grooves.

11. A pneumatic tire having at least one circumferential main groove extending in the tire circumferential direction on a tread surface, wherein a plurality of land portions are defined between the circumferential main groove and a tread edge or between the circumferential main grooves,
a vehicle-mounted outermost land portion, which is the outermost land portion in the tire width direction on the vehicle-mounted outer side, is provided with a plurality of first width direction grooves extending in the tire width direction and having at least one end terminated within the vehicle-mounted outermost land portion, and a plurality of second width direction grooves extending in the tire width direction,
the first width direction grooves and the second width direction grooves are alternately arranged in the tire circumferential direction while being spaced apart from each other in the tire circumferential direction,
one of the first width direction grooves and one of the second width direction grooves adjacent to the one first width direction groove on one side in the tire circumferential direction form a pair,
the one first width direction groove of the pair has a first portion extending from the inner side toward the outer side in the tire width direction and extending toward one side in the tire circumferential direction,
the one second width direction groove of the pair extends from the inner side toward the outer side in the tire width direction and extends toward the other side in the tire circumferential direction,
and an outer end in the tire width direction of the one second width direction groove of the pair is positioned on the outer side in the tire width direction relative to an outer end in the tire width direction of the one first width direction groove of the pair.

12. The pneumatic tire according to claim 11, wherein both ends of the first width direction grooves are terminated within the vehicle-mounted outermost land portion.

13. The pneumatic tire according to claim 11 or 12, wherein the second width direction grooves communicate with the tread edge on the vehicle-mounted outer side.

14. The pneumatic tire according to any one of claims 11 to 13, wherein the one first width direction groove of the pair and the one second width direction groove of the pair have an overlapping portion when projected in the tire circumferential direction.

15. The pneumatic tire according to any one of claims 11 to 14, wherein the one first width direction groove further has a second portion extending from an inner end in the tire width direction of the first portion toward one side in the tire circumferential direction, and at least a part of the first portion or at least a part of the second portion has a chamfered portion at an opening to the tread surface.

16. The pneumatic tire according to claim 15, wherein, in a reference state in which the pneumatic tire is mounted on an applicable rim, filled with a prescribed internal pressure, and unloaded, an inclination angle of a tapered surface of the chamfered portion of the second portion with respect to the tire radial direction is greater than an inclination angle of a tapered surface of the chamfered portion of the first portion with respect to the tire radial direction.

17. The pneumatic tire according to any one of claims 11 to 16, wherein the first width direction grooves each have one end terminated within the vehicle-mounted outermost land portion, the second width direction grooves each have at least one end terminated within the vehicle-mounted outermost land portion, shallow grooves are further provided with one end communicating with the other end of the first width direction grooves, a groove depth of the shallow grooves is shallower than a groove depth of the first width direction grooves, and the other end of the shallow grooves communicates with the circumferential main groove.

18. The pneumatic tire according to claim 17, wherein the groove depth of the shallow grooves is 2.5 mm or less.

19. The pneumatic tire according to claim 17 or 18, wherein the shallow grooves extend at an inclination angle of 40° to 60° with respect to the tire circumferential direction.

20. The pneumatic tire according to any one of claims 17 to 19, wherein the shallow grooves communicate with an end on one side in the tire circumferential direction of the first width direction grooves.
